# EUROPEAN PATENT APPLICATION

(11) **EP 2 028 160 A2**
(43) Date of publication of application: **25.02.2009**
(21) Application number: 08162785.3
(22) Date of filing: 21.08.2008
(51) Int. Cl.: C02F 3/32

(54) **Modular floating helophyt filter**

(30) Priority: 24.08.2007 NL 1034285
(71) Applicant: Bright Water Company B.V., 1271 VA Huizen (NL)
(72) Inventor: Siers, Matthijs, Geert,, 1251 PS Laren (NH) (NL)
(74) Representative: Hatzmann, Martin

(57) **Abstract**

The invention describes a floating, connectable biological bog plant filter for purifying surface water, comprising a housing having one or more water inlets, which housing is filled with a substrate suitable for bog plants, one or more floating elements fastened to or integrated in the housing, a pump in a pump housing and means for coupling the bog plant filter with adjacent bog plant filters or anchoring it to the bottom or bank of the surface water, characterized in that the one or more water inlets are situated below the level of the water surface and above the level of the substrate and that at the bottom of the substrate a drainage system is provided for collecting filtered surface water, which drainage system is connected to the pump housing.

## Description

The invention relates to a floating connectable biological bog plant filter which is suitable for purifying fresh surface water. Such a filter is known from, for instance JP 10-113686, in which a floating filter is described where water is purified via a passive process and where bacteria are added in a water transmissive holder. The drawback of such a filter is that no active water flow is fed through the filter, so that the filtering capacity of the substrate and the bacteria is not optimally used.

US patent application 5,618,413 solves this problem by actively pumping the fresh surface water into the filter. However, in this system, the water level (after, first, having flowed through a purification layer at the bottom of the filter) is pumped upwards by a pump, above the level of the surface water, so that it is fair to say that the net liquid flow through the filter is directed upwards. This procedure is disadvantageous because it can cause blockage of the inlet in the substrate. A further drawback is that operation takes place against the force of gravity, so that possibly, water pressure is formed at the inlet of the system. This could also cause the substrate to swir1 upwards.

The object of the present invention is, inter alia, to obviate this drawback while simultaneously, sufficient variability in the system is maintained for adjustment to any type of surface water and pollution while, at the same time, the system is optimally suitable for fitting into the landscape.

To this end, the invention relates to a floating connectable biological bog plant filter for purifying surface water, comprising a housing having one or more water inlets, which housing is filled with a substrate suitable for bog plants (helophytes), one or more floating elements fastened to or integrated in the housing, a pump in a pump housing and means for coupling the bog plant filter to adjacent bog plant filters or anchoring it to the bottom or bank of the surface water, characterized in that the one or more water inlets are situated below the level of the surface water and above the level of the substrate and that at the bottom of the substrate a draining system is provided for collecting filtered surface water, which draining system is connected to the pump housing. It is clear that here, the water flow is directed substantially downwards, so that blockages will hardly occur, if at all, so that a possible water pressure occurs at the outlet side of the water flow, and swirling of the substrate will not occur.

(Fresh) surface water is understood to include: ponds, lakes, pools, recreational lakes, ditches, canals, ponds in zoos and amusement parks, canals, rivers, polder drainage outlets, water storage basins and similar kinds of polder outlets. Also included are natural swimming pools and formerly chlorinated water and salt water swimming pools.

Several other plant filters are described in the (patent) literature, particularly in Japanese patents and patent applications. Worth mentioning are, inter alia, JP 10-028990, JP 09-314180, JP 09-029283, JP 08-001188, JP 2003-112191, JP 2002-001387, JP 10-258299, JP 10-165019, JP 10-113685, JP 09-056279, JP 08-155477, JP 06-226288 and GB 2411396. In none of these bog filters, an active system is described in which surface water is let in at the top of the filter, the water flow in the filter is substantially downwards and water, having passed the filter, is collected at the bottom in a drainage pipe and is pumped from the filter.

The present floating bog plant filter comprises a housing in which a substrate for helophytes is present. Plants that are eminently suitable for the filter of the present invention are, for instance, reed, iris, sedge, sweet flag, purple loosestrife, scurvy grass, marsh orchid, marsh arrow grass, meadowsweet, bog Labrador tea, marshwort, buckler fern, verbena, marsh St.Johns-wort, sneezewort, marsh thistle, bird's-foot trefoil, mare's tail, reed mace, water plantain, hairy willow herb, water strawberry, bur-reed, water germander, devil's bit scabious, flowering rush, hemp agrimony, common meadow rue, marsh woundwort, marsh lousewort, water dock, great water parsnip, brookweed, bladderwort, broad-leaved ragwort, marsh bedstraw, buttercup, marsh dock, pickerel weed, arrowhead, bulrush, some species of bamboo, etc.

The total vertical effective substrate thickness can vary. The specific weight of the substrate may vary depending on the composition. The substrate thickness and the specific weight, together with the surrounding construction, determine the draught of the floating bog plant filter. Optionally, at the top, the substrate surface can slope downward, so that more different species of flora (and the associated fauna) can have a habitat. As a result, also, the natural appearance of the filter is improved and the filter resembles a natural bank even closer. The difference in weight that is created with a sloping configuration of the substrate surface and the thus created change in the buoyancy can be compensated through an adaptation of ballast of one of the floating elements.

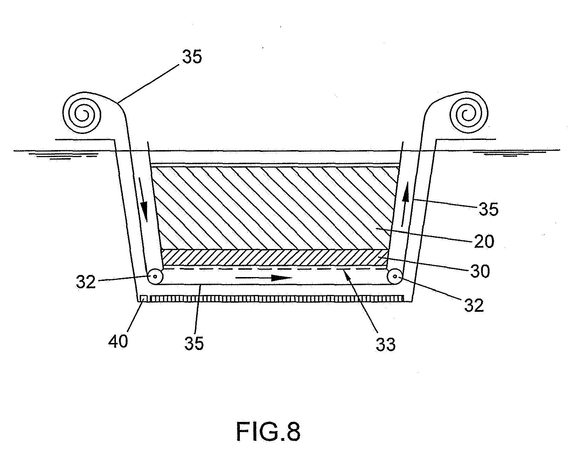

Preferably, the substrate is composed of three layers, a top layer as protection and decoration, one or more intermediate layers for providing the necessary structure for the helophytes to root and for obtaining the required filtering action (inter alia nitrification and denitrification processes) and a bottom layer for any further filtering and absorption.
- The top layer preferably consists of lava gravel. In addition to having a decorative effect, lava gravel (1 to 2 cm large) also aims to protect the underlying layer and ensure that newly planted plants are not blown away or blown down and/or are washed down. The lava gravel ensures a first filtering of coarse material and also ensures, through the rough and varying forms, that fallen leaves from the trees and helophytes themselves do not block the following layer. Lava gravel renders walking barefoot on the substrate less inviting. As the gravel is porous, active bacteria can nestle well in the lava gravel. The effect of the lava gravel is that the unnatural appearance of the intermediate layer of the substrate (for instance a rock wool mat) disappears.
- The intermediate layer preferably comprises a rock wool mat. As substrate component, the rock wool mat prevents the underlying layer from moving or floating away. In addition, the rock wool mat is eminently suitable for solidly planting relatively young helophytes and having them take root rapidly and easily. The rock wool mat has an airy structure which absorbs water well. Owing to this property, the useful aerobic bacteria and the useful anaerobic bacteria feel right at home and reproduce rapidly so that the degradation processes can take place efficiently. The rock wool mat has a very low specific weight so that less buoyancy is required for the floating bog plant filter.
- Optionally, the intermediate layer comprises rock wool crumbs, cut-up pieces of rock wool, also called rock wool flakes or rock wool cubes. These rock wool flakes are a residual product of a number of rock wool products for greenhouse horticulture. This residual product is highly suitable as substrate component. Like the rock wool mat, the rock wool crumbs have an airy structure which absorbs water well. Here too, the useful aerobic and/or anaerobic bacteria feel right at home, so that the degradation processes such as nitrification and denitrification can take place efficiently. The rock wool crumbs with their varying forms can simply be poured into the filter and, after having been tamped down, ensure, together with the overlying rock wool mat, that no preferential flows are formed. Optionally, between the layers of rock wool crumbs, further, a number of layers of rock wool mats could be inserted so that the water has to pass even more layers and the filtering and purification increase further. A great advantage of the rock wool crumbs is further that this component may be mixed with for instance filtering sand or other suitable substrates (sand or lava gravel, mixed or not mixed with Styrofoam granules or comparable light material with a large surface) so that the bog plant filter can meet very specific demands and still maintain a low specific weight.
- Also usable are residual products of rock wool from greenhouse horticulture. The rock wool used in the greenhouse horticultural industry could be used as substrate component when it has been ground up. The rock wool crumbs can be replaced with merely the ground residual product or with a combination rock wool crumbs or other substrate components such as sand, lava stones etc. In this manner, also the waste products (nutrients and the used and ground rock wool) from the greenhouse horticulture are recycled and degraded.
- Sand or lava gravel or pond substrate. As a replacement for or supplement of rock wool, optionally also (filtering) sand, lava gravel and pond substrate can be used.
- Straw. Through the above-mentioned rock wool or sand substrates or combination substrates, a small percentage of straw can be mixed. The straw serves as a nutrient and is important in particular for the micro organisms in the starting phase of the floating bog plant filter.
- Phossex Ultra or other phosphate binders such as burnt shell grit or Phoslock. Such a phosphate binder can be added to the substrate. After 10 to 15 years, the substrate may be used as fertilizer. The shell grit can also prevent the drainage system at the bottom of the system, for instance a drainage pipe, from becoming blocked.
- The bottom layer, if present, preferably comprises zeolites or other nitrogen compound binders. As zeolite, naturally occurring materials can be used such as clinoptinolite (ZeoPond®), calcium montmorrilonite, modified zeolites (available from United Technology Consultants of Rotterdam) and the like. These zeolites have the property of absorbing harmful substances, among which ammonium and other nitrogen compounds, from the water. Heavy metals can be irreversibly bonded to such zeolites so that no toxic substrate is formed. Optionally, the zeolite or a different absorbent could be bonded to a "roll-on mat" which, upon saturation of the absorbent, is pulled further through the substrate (see Fig. 8). It is possible in the existing construction to regenerate the used adsorbents (see below).
- In addition to the above mentioned elements which can form part of the substrate, the substrate can also be provided with common, natural bacterial cultures or specific bacterial cultures which degrade/convert specific waste residues in the water such as medicine residues, hormones, heavy metals, PCB's and other harmful substances in the water. As a standard, use is made of the bacteria which naturally occur in the ambient water and effect nitrification and denitrification processes. Specific purifying bacterial cultures can be deployed in the substrate to meet a specific purification demand.

The floating bog plant filter can filter the water with particles (organic/inorganic) floating therein. The filter does not become blocked in that roots and new shoots keep the filter such that it can be flowed-through and in that natural processes (nitrification and denitrification) further degrade the "filter sludge". In turn, the degradation products from these reactions can serve as nutrients for the plants, disappear as harmless gas from the filter or be bonded in the substrate. Further, contrary to the system of US 5,618,413, there is no need for a flush provision or for aeration. The floating bog plant filter is further capable of biologically degrading dissolved (harmful) waste products (both organic and inorganic) and remove/discharge them and thus purify the water. This filtering and purification is comparable to that of the IBA helophyte filters (class I, II and III) known to the skilled person.

The floating bog plant filter can, inter alia, remove or eliminate the following components:
√ Algae and protozoa (1-100 µm)
√ Bacteria (0.3-3 µm)
√ Bacterial flakes (3-25 µm)
√ A portion of the viruses (0.001-0.1 µm)

Further, in addition to solid particles, all sorts of dissolved substances can be removed from the filter, such as fertilizers, urine, faeces, and specific industrial waste products. Through the choice of bacteria which can be added to the substrate, the cleaning capacity can be adjusted to the type of substance which pollutes the surface water in situ. Owing to the filtering operation of the bog filter, nutrients are extracted from the surface water which otherwise would have been eaten by algae disrupting the ecosystem. The number and growth of the algae are thus inhibited, which entails an additional water purifying action of the system, thereby preventing eutrophication.

In this manner, the bog plant filter is suitable for all sorts of surface water. Also formerly chlorinated water or salt water swimming pools can be purified with this system. The floating bog plant filter can also be made suitable for processing water which contains domestic waste, sewage water and/or industrial waste water and water requiring purification for greenhouse horticulture or for certain industries.

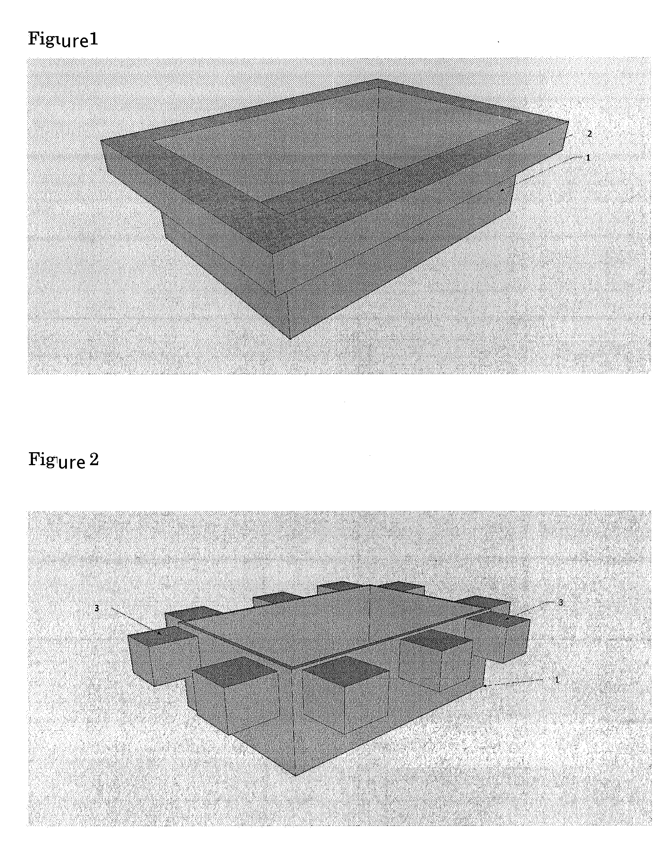

The floating bog plant filter consists of a housing in which the substrate is present (see Fig. 1-6). This housing has a bottom and four upstanding walls. The walls can taper downwards towards the bottom so that in empty condition, the housing is stackable, which is a great advantage for transport and storage. The bog plant filter further has one or more (variable) floating elements, the so-called floating chambers and/or floaters (see Fig. 1- 4). These floating elements serve to create a buoyancy such that the bog planter filter does not sink to the bottom but that the water inlet openings are indeed below the level of the water surface. A floating element can be accommodated in the wall of the housing in an integrated manner, or be detachably fastened thereto. Optionally, a number of floating chambers or floaters are variable in buoyancy in that extra water flows in or out or in that air is blown in. Both the material of the floaters or floating chambers and the material of the housing holding the substrate can be highly diverse, provided that it is not water permeable. The housing or the floating elements can also be designed with ballast tanks, automated or not automated.

The floating elements and/or ballast tanks can container water, sand or other material. Over time, the filter system will gain weight as a result of the increased biomass and waste. The filter can compensate for these changes in weight and, optionally, adjustment of the buoyancy is possible. This can be done by, for instance, placing in the floating elements and/or the ballast tanks, at the top side above the water surface, a closable hatch through which ballast can be added or removed. If ballast is formed by water, changing the content of the floating elements and/or ballast tanks could be done automatically by means of a pump connected to water from the filter or from outside the filter.

Plastic materials, such as polyester and its variants or HDPE (high density polyethylene) or other non-porous plastics can very well be used for the floating elements and/or ballast tanks, but also other materials such as wood and other natural products, sorts of metal, pond foils, concrete, glass etc. The filling of the floaters can also consist of all sorts of materials, such as air or other gases or gas mixtures, foam, PUR (polyurethane) or air filled empty soft drink bottles.

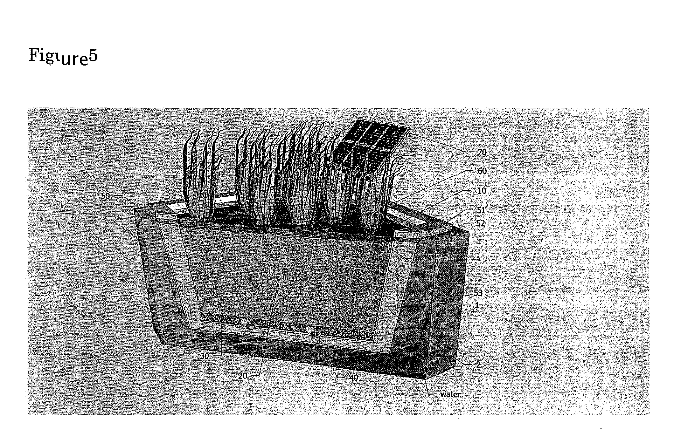

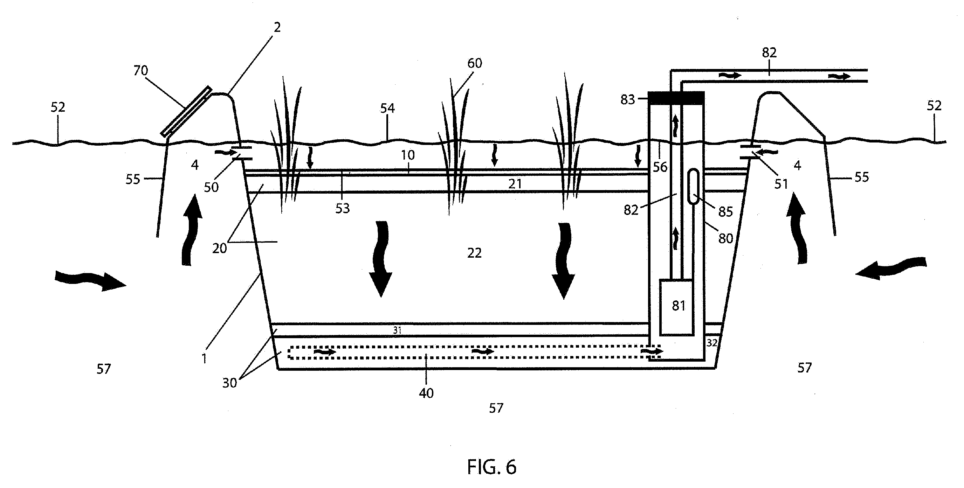

The water inlet (or several inlets) which is always located at the top of the housing (see Fig. 5) can be designed in different forms, such as round, oval, square or for instance rectangular. The water inlet may be sealed off with the aid of, for instance, a lid or a valve or a slide or other sealing method, so that maintenance on the filter can take place without influent water continuously flowing in. When the water inlet opening or openings are closed, and effluent water is pumped from the bog plant filter, the housing of the bog plant filter slowly rises because more buoyancy is created. By providing a marking on the sides of the housing, malfunctioning of the inlet openings can be made visible from a distance. The water inlet and hence the floating bog plant filter can be protected from dirt which floats on the surrounding surface water by placing a plate or board or different construction in front of it which extends downwards into the water (see Fig. 6). Thus, larger pollutions (leaves, bottles, scraps of paper etc.) are prevented from floating/flowing into the bog plant filter. However, in view of the natural habitat of the surface of the filter, the filter of the present invention will be less affected by inflowing pollutions which enter via the inlet with the surface water, because the "natural bank" formed by the filter allows for these pollutions to be decomposed by natural organisms, this contrary to some filters from the state of the art (for instance US 5,618,413). This construction also protects the filter from freezing, in that only water from deeper water layers, i.e. water of more than 0°C flows into the inlet.

The larger the water inlet (the vertical opening), the easier fluctuations in the specific weight of the substrate and hence the draught of the total bog plant filter can be compensated.

In the present filter, also contrary to the system of US 5,618,413, there is no direct link between the water level above the substrate and the water outlet, so that the water in the filter must always pass the filter.

It is also possible to protect the surrounding surface water from floating waste from the bog plant filter itself, which might end up in the water again via the inlet openings or over the rim/edge of the housing. Backflow of water via the inlet opening(s) is possible and can for instance take place when the pump breaks down, is switched off or through swell. Optionally, a one way valve can be fitted in the water inlet so that the water can never flow back outside via the water inlet. Overflowing over the edge of the housing can be prevented by having the housing project sufficiently above the water surface. As alternative, or additionally also at the inner side of the edge a board or plate or other construction can be placed to prevent direct outflow.

The influent water slowly sinks down through the filter. At the inner side, on the bottom of the bog plant filter, a drainage system is present (see Fig. 5). The drainage hose (see Fig. 6) is connected to a pump housing which is filled with water through the effect of "communicating vessels" (in this case the assembly of outside water, housing and pump housing). In the pump housing, a pump or an inlet of a pump is located which ensures that effluent water can be pumped from the housing. As a result, a continuous water flow of influent water is formed at the top side of the filter, and effluent water at the bottom side of the filter. When the pump inlet or the dipping pump is fitted at the top side of the pump housing, just below the water level, the pumping installation is prevented from pumping the bog plant filter completely dry. When the pump or pump inlet is fitted on the bottom of the pump housing, a float can be fitted which switches off the electrical or mechanical circuit of the pump when the water is too low (for instance in case of a blockage or higher resistance of the bog plant filter, or blockage of one or several water inlets). It is also possible to connect the pump to the float or another floating element (such as sounding rod) so that it is always located just below the water level in the pump housing. The advantage of this is that a higher delivery can be achieved as the lift is kept at a minimum. The effluent water is pumped back to the surface water, while there is also the opportunity of adding something to the water, for instance air or, in the case of decorative elements, a colorant. Discharging the cleaned water preferably happens at the top over the edge of the housing, or via an outlet in the housing above the water surface level, but this can also take place below the water level. Through the water pressure formed in the system, it is even possible to use the water flowing out in a playful manner, in the form of, for instance, a fountain or a waterfall. It is also possible to distribute the purified water over the surface water better by means of a (long, optionally floating) hose. This latter might be used for setting in motion any floating layers of algae on the surface water, which is beneficial to the ecology of the water. Floating layers can also sink through artificial rain and be degraded on the bottom. A floating hose can further be practical when the filter floats in the middle of a pond, because then, one can pull this hose close, via a hidden underwater rope or with a special pole for, from the bank, taking samples of the purified water without approaching the filter. As the effluent water of the system flows visibly outwards, it can be observed from a distance whether the floating bog plant filter still circulates water through the substrate. When a float, coupled to the pump, is fitted in the system, the pump will be switched off when the water flow does not proceed properly in the system (for instance through a blockage at the water inlet or in the substrate itself), so that the water flow is halted and therefore no water will actively flow into the housing any more. Therefore, a good setting of the float prevents pumping dry completely, so that when a breakdown occurs, the bog plants will not be harmed (the plants still have their roots in the water). Verification of the operation of the filter may also take place through a floating sounding rod in the pump housing with a calibration provided thereon. When, during normal operation of the pump, the water level in the pump housing falls relative to the constant water level on the top of the substrate, this means that the filter resistance increases. With this, the filter resistance can be observed from a distance. The moving sounding rod or the float in the pump housing could then decrease the flow rate of the pump electronically. A float or electrodes with relays can also effect the water level to stay so high that (the supply hose of) the pump remains under water. The float and/or a water flow detector at the effluent pipe could also generate a breakdown signal and send this as text message to, for instance, a GSM apparatus so that the system can be monitored from a great distance. The equipment required thereto can be fed by the described energy sources. With an acute, incidentally too high filter resistance of the system, the substrate can be worked by piercing the top layers of the substrate with a number of pointy rods or sticks, possibly in an automated manner, so that the resistance decreases and degradation processes are given a greater opportunity for processing the extra polluted water.

After the water has flown in via the water inlet and before the water has penetrated the substrate, the water may be additionally aerated, so that additional dissolved oxygen is introduced into the water and the aerobic bacteria will thrive better and can operate better. Aeration can take place with an electric aeration pump or, for instance, by a mechanical (wind-) driven aerator. If desired, an aerator (electrical or mechanical) can be placed in front of the water inlets, so that the water enters the filter in aerated condition. Preferably, such an aerator will hardly, if at all, set the water in front of the inlet in motion.

The energy for the pump and any other energy demanding parts of the bog plant filter can be provided in different manners. The floating bog plant filter can be provided with solar energy by means of a panel with solar cells. The thus generated electric energy can be stored in a battery or be used for directly operating the pump, lamp (led) or aerator or a different part. The floating bog plant filter may also work without battery. The energy source which provides electrical or mechanical energy may then supply directly to the pump. However, without battery, it is hard to have the pump work continuously or at a fixed, defined interval and to thus create a continuous water flow in the filter.

The battery and/or the water pump of the floating bog plant filter can be provided with energy through existing solutions for the use of wind energy. Optionally, for instance a wind mill can be used in combination with solar cells. An obvious windmill/turbine is a windmill/turbine which moving parts present no danger and which takes up little space.

Existing solutions for obtaining energy from water waves or from water flow can also be used for providing the battery or the water pump of the floating bog plant filter with energy.

Finally, the battery or the pump can also be fed through mains current (230 V or a different voltage). Here, in some case, use will be made of a transformer. This naturally requires a connection to a mains provision on the bank of the surface water.

When the water temperature is low, a solar collector can be placed on the edge of the housing. This panel takes up the water flowing into the top of the housing and heats it to a temperature which is optimal for the bacteria present in the substrate. As, in turn, this heated water heats the substrate, the activity of the bacteria cultures will increase, so that in this period, the purifying yield is higher than normal for such filters. Optionally, a one way valve can be fitted on the water inlet(s) so that the heated water cannot flow back via the water inlet into the surrounding colder surface water, buts sinks into the filter as warm as possible.

Optionally, also the wall of the housing, which comprises the substrate, can be insulated via existing insulation techniques like those used in housing construction. As a result, the substrate which, through the activity of the bacteria, takes on a higher temperature than the surrounding surface water, will cool down slower. As, on average, a higher temperature is effected, the bacteria thrive better and work more efficiently. Additionally, this insulation also provides for the substrate not to freeze in case of hard frost. The filter can be prevented from freezing tight in the water by having the outflowing water (which always has a temperature of more than 0°C) flow out directly around the filter. As a result, the floating elements are not surrounded by ice and ice breaking up has no chance.

As already briefly mentioned hereinabove, with the existing construction, regeneration of the absorbents used is possible. To this end, from the point in the substrate where the absorbents are present, some sealable passages are to be fitted. For regeneration, the filter is temporarily pumped empty, which, in itself, is possible as the roots of the plants remain moist because clinging water is still present in the substrate. Then, the passages mentioned are opened and the filter is raised or put in a regeneration bath/container (for instance saline solution) as far as those passages. This may be done, for instance, via a container truck containing the regeneration liquid wherein the filter is submerged. In this manner, the regeneration liquid does not reach the roots and parts of the filter located higher up. After that, the pump is activated and the regeneration liquid will circulate through the lower part of the filter. After regeneration, the liquid is pumped away via the pump and the entire system can be replaced into the water to be purified.

In order to further simplify regeneration, the layer to be regenerated could be arranged in a drawer in the housing. By introducing a partition above the drawer, the drawer can be removed without the substrate sinking. Then, by means of a drawer with fresh or regenerated material, a new layer can be provided, while the removed drawer can be subjected to regeneration, possibly by discharging it to a regeneration system especially designed to that end.

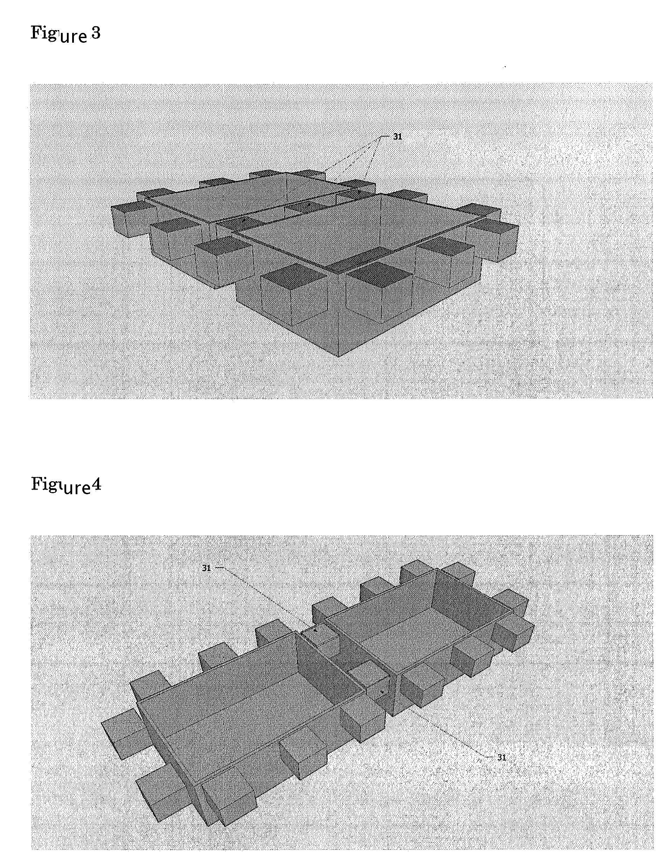

The floating bog plant filter is connectable to other bog plant filters (see Figs. 3-4, 9 and 14) so that a greater purifying capacity is obtained. The connected bog plant filter units must be able to move relative to each other so that possible waves on the water form no problem. The couplings can be brought about in different manners, for instance via a ball coupling (car towing hook principle) steel cables, rubber joints, wood joints, polyester or other plastic joints, metal stainless steel hinge joints and any other joints allowing mutual movement of the connected filters. The floating bog plant filters can also be connected such that they have one or more floating elements jointly (see Fig. 3-4). When several floating bog plant filters are connected one adjacent to the other, and the water inlets are opened only at the first floating bog plant filter of the row, a form of "cascade"-purification can be achieved. The effluent of the first floating bog plant filter can then be guided to the following filter and there be used as influent. In this manner, the water can be purified further/better/cleaner. When all water inlets of the individual filters remain opened, then, contrary to systems from the state of the art (for instance US 5,618,413) the coupled filters do remain operational as separate units, which each have their individual inlet and outlet. This prevents that through blockage or poor functioning of one of the filters, the entire cascade of interconnected filter is rendered inoperative.

The floating bog plant filter can simply be moved by dragging or pushing it to a different location on the water.

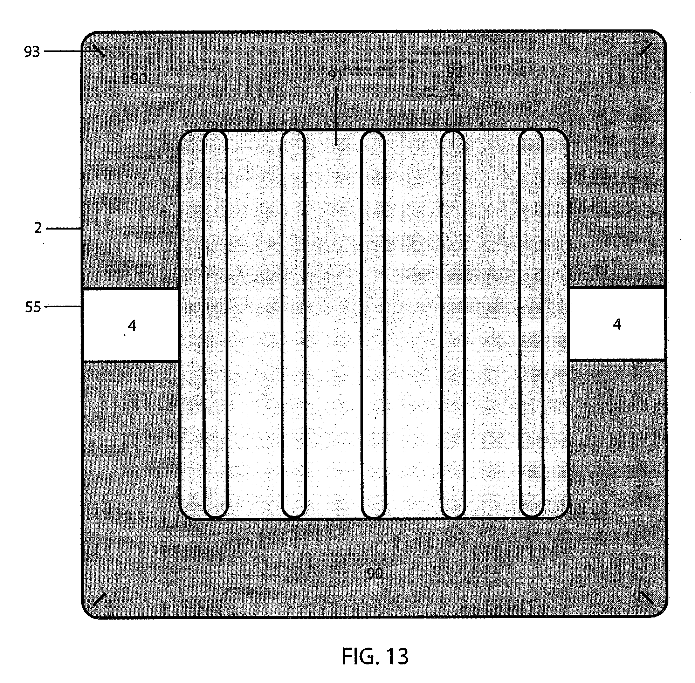

For a short period of time, by closing the water inlet as described hereinabove, even the buoyancy can be further enhanced whereby moving is further simplified. For moving on land, preferably, recesses or slots are present at the bottom side, in which fit the tines of a forklift truck (see Fig. 13). In addition, in the longitudinal direction in these slots, straps or webs can be inserted so that a crane can simply lift the filter. Moreover, such a construction reinforces the bottom of the filter.

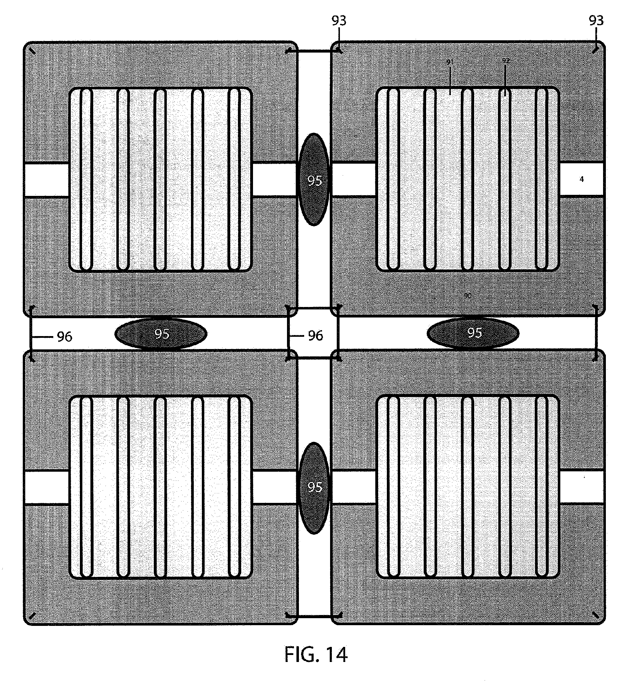

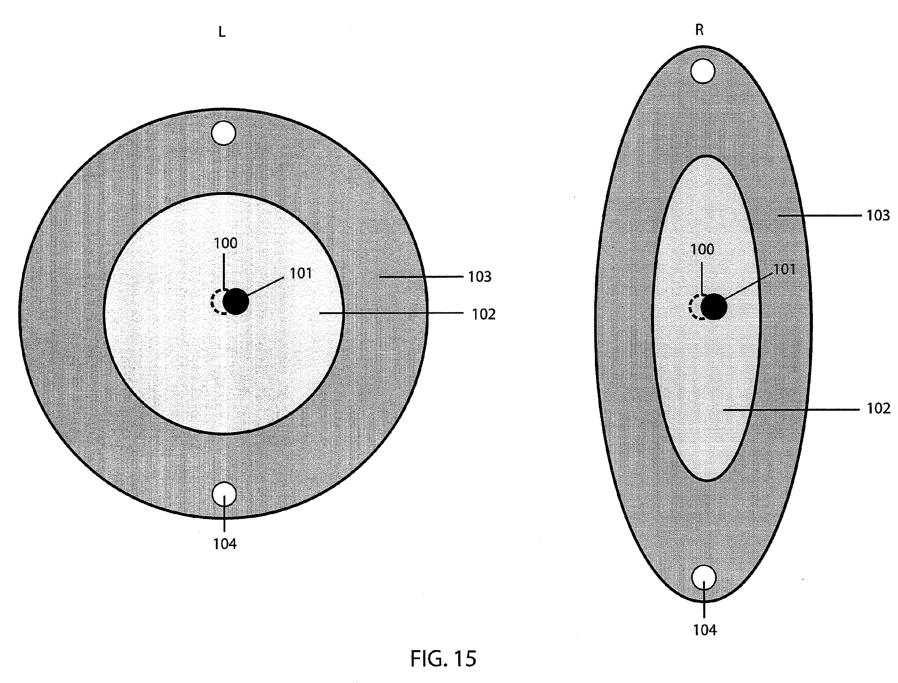

The floating bog plant filter according to the present invention is durable and can (preferably) be built in a manner burdening the environment only little, it being understood that the plants of the bog filter are to be cut back at regular intervals (for instance once a year), while the biomass (including the former waste in the water) is to be discharged so that it may be reused as compost, and further maintenance is hardly required. By means of new plant shoots and roots, the low- maintenance filter itself effects that it does not become blocked. If, with a connected system, straw in a netting or gauze is provided as a buffer between two filters in the surrounding water (see Fig. 14 or, as an alternative and also with individual systems, in the cavities of the overhanging edge at the water inlet) this is typically a favorite place for water fleas to nestle, which form a natural algae control. This is beneficial not only to the ecological condition of the water but also results in less maintenance to the filter. In addition to buffers of straw, also, air filled buffers can be provided between the elements (see Fig. 14, 15). These buffers can then also be used for actively blowing air (and hence also O₂) into the water. To this end, such a buffer is provided with an air inlet valve at the top (air side) of the buffer, which is open in non-compressed condition of the buffer. At the bottom side (water side) of the butter, there is an air outlet valve which is opened when the buffer is compressed (see Fig. 15). If desired, the air can be blown into the water elsewhere (for instance at the location of the air inlet) by means of a small tube on the air out let opening.

The floating bog plant filter can also serve as an easy to install "natural bank". The most important difference with the construction of traditionally new "natural banks" is that the water is pumped actively through the filter. No infrastructural adjustments need take place so that these natural banks can occur at more locations at relatively limited costs. In this manner, in ponds of a city like Amsterdam, this alternative form of "natural banks" can simply be placed and thus, also, a contribution is made to a standard and controllable open space planning on the canals. In addition to the purifying action of the bank, also, the protective action of the bank is imitated by the filter, so that young animals living there are protected from large predators, both in the water and on the filter itself.

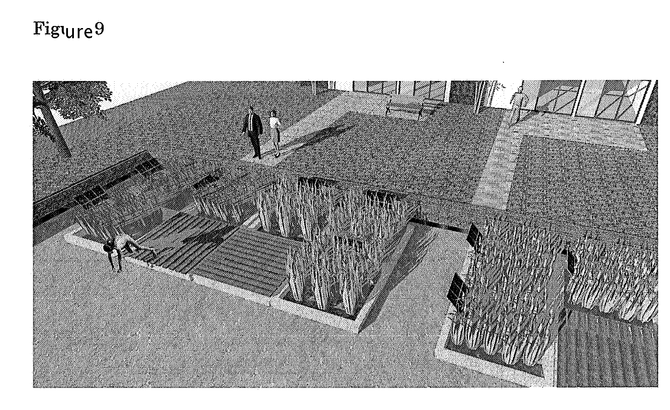

The floating bog plant filter can be fastened to quays (see Fig. 9), the embankment or waterside, to houseboats and can also float "individually" in the water connected to an anchor. For coupling to fixed bank parts, use can be made of the same coupling system with which the floating bog filters can be mutually coupled. In this manner, the system can also be designed to be suspended from the quay, while taking into account the vertical movements through swell and changes in the water level.

The individually floating bog plant filter is preferably held in place the way this is also done with boats: either with at least two mooring ropes to the quay, or with at least two sunken anchors. By using two mooring ropes or anchors, the bog plant filter remains in an ideal direction so that the solar panel can also be held facing south and the plants are not each time at a different angle relative to the sun. In view of an esthetic design, it is possible to arrange the eyelets to which the mooring ropes or ropes are fastened below the water level.

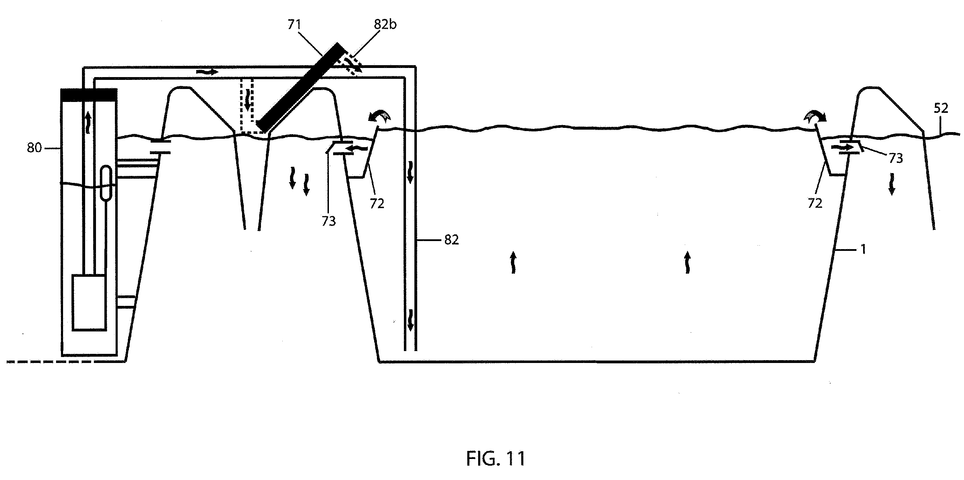

When connecting the bog plant filters of the present invention, there is the possibility to also connect, in addition to identical filters, other elements between or next to the filters. The floating housing can serve as floating swimming pool (see Fig. 11), when the floating bog plant filter is moored/coupled without substrate and with inoperative water inlets (for instance closed inlets or inlets with a one way valve, so that no surface water can reach the purified swimming water) next to an operative and floating bog plant filter. This floating swimming pool, whose dimensions can be selected freely, is filled with the effluent of the floating bog plant filter. Therefore, the effluent is not pumped back to the surface water but only into the floating empty housing filled with merely water. The floating bog plant filter(s) along this floating natural swimming pool filter(s) influent water of the surrounding surface water as well as the connected floating swimming pool. The influent ratio between surface water and swimming pool water can be regulated with a tap. Here, solar collectors can be used for heating the effluent water of the filters to a pleasant temperature. In such a floating swimming pool, also, foil can be used as (part of the) housing as the material of the filter is not harmed by the (aggressive) root growth. Superfluous water in the pool can be discharged through inlet openings present in the housing as natural overflow. To this end, these inlet openings, which are now actually outlet openings, are provided with a one-way valve outwards. For these water outlets, optionally, a skimmer can further be placed for collecting suspended and floating particles in the water. The overflow water is, in turn, purified by the adjacent filters. Further, with the floating elements and the possible ballast tanks, the depth of the pool can further be set when it floats.

Adjacent a floating bog plant filter, also, one or more floating terraces can be fitted. The terrace may be the lid of the floating natural swimming pool. All kinds of forms can be made wherein floating terraces (jetties) can be alternated with floating bog plant filters or floating natural swimming pools.

The dimensions and forms of all these elements, the floating bog filters included, can be chosen freely. It is preferred that the floating filters have straight walls, so that they can easily be connected with the walls one next to the other. Therefore, the form can preferably be a regular triangle, rectangular or square, pentagon, hexagon, or be multi-angled. More preferred is the form rectangular/square or hexagonal (honeycomb-model). Deviating forms (round, kidney-shaped, lily-shaped, teardrop-shaped, yin-yang-shaped) are also possible and often preferred from a decorative viewpoint. The size of the floating bog plant filter can be chosen freely, it being understood that the buoyancy must be sufficient to enable the water inlets to be located under the level of the water surface and above the level of the substrate. With shallow water (as may sometimes be the case close to banks or in a swimming pool) the choice can be made to have the housing rest on the bottom. Preferably, the thickness (height of the total of the substrate layers) is between 60 and 150 cm.

To protect the floating bog plant filter from birds, other animals and people (with the exception of the service engineer) a smooth inclining and/or round edge can be fitted on the floating bog plant filter. Birds and other animals then glide off towards the outside and it is unpleasant to sit on/stand on for people and animals, if so desired. In addition, the rain washes the inclining edge or inclining solar panel clean of dirt or bird droppings. For certain species of animals, emergency steps can be fitted in the filter so that they can safely leave the filter (compare steps with cattle grid). The edge can be made passable for the service engineer by a detachable specific seat/plateau on the edge with a good en solid fit (compare to a luggage rack on a smooth car roof). The substrate with the plants growing therein can be protected from damage by insects and nest-building by means of a very fine (plastic) gauze or wire at the circumference.

Apart from the filtering action, the bog plant filter can serve other purposes. For instance, the filter can be used for advertising (natural advertising) and lighting or signposting. When, on the edges or at a different logical location, the floating bog plant filter is fitted out with advertisements or otherwise informative boarding, the bog plant filter can be used for promotional purposes on water. Also signposting of waterways (natural buoy) and roads is possible. Use can be made of lighting, for instance through LEDs.

Also a part of the invention is a method for purifying surface water via a bog plant filter as described hereinabove. The use of a bog plant filter according to the invention for purifying surface water forms part of the present invention too.

On the basis of the appended Figures, presently, a detailed description of different embodiments for the bog plant filter will follow. These embodiments should not be construed to be limitative of the invention, after reading the above description a skilled person will be able to conceive many alternative embodiments which fall within the scope of protection of the appended claims.
Fig. 1 shows the appearance of a simple form of the bog plant filter;
Fig. 2 shows an alternative embodiment of the bog plant filter;
Fig. 3 shows a set of connected bog plant filters;
Fig. 4 shows an alternative form of a set of connected bog plant filters;
Fig. 5 shows a cross section through a bog plant filter;
Fig. 6 shows another cross section through a bog plant filter;
Fig. 7 shows the cross section of Fig. 6 with some additional details;
Fig. 8 shows a cross section of a specific embodiment of a bog plant filter;
Fig. 9 is an artist's impression of several bog plant filters in combination with other floating elements;
Fig. 10 shows a cross section of a specific embodiment of a bog plant filter;
Fig. 11 gives a cross section of a filter connected to an element that can serve as swimming pool;
Fig. 12 shows a top plan view of an embodiment of a bog plant filter;
Fig. 13 shows a bottom view of an embodiment of a bog plant filter;
Fig. 14 shows a bottom view of a connection of bog plant filters;
Fig. 15 shows a detail of an air buffer in compressed condition (R) and non-compressed condition (L).

In a simple form (Fig. 1), a bog plant filter has a housing with a floating element integrated in the wall/edge (2) of the housing (1). As alternative (Fig. 2), there can be several separate floating elements (3) which are detachably connected to the housing (1). It is fairly simple to couple these filters to each other, as indicated in Fig. 3 and Fig. 4, wherein the bog plant filters are connected to each other via a number of floating elements (31). Additionally, it is made clear that it is possible to use one edge with floaters on the side where coupling takes place (the edge is not thicker when coupled).

The cross section of Fig. 5 shows that the housing (1) is filled with three layers of substrate (10, 20, 30) consisting of a top layer (10), an intermediate layer (20) and a bottom layer (30). In the bottom layer, the drainage system (40) is located, which can be built up from one or several drainage pipes/drains. On the plane of the cross section, on the left hand side and on the right hand side in the housing, two water inlets (50, 51) are drawn which lie below the level of the water surface (52) but above the level of the substrate (53). Also, in this Figure, the helophytes (60) are indicated and a solar panel (70) with solar cells.

The walls of the housing are indicated in the Figure as tapering downward, but they can also be of perpendicular design. The wall/edge of the housing can be designed to be insulated (2).

In Fig. 6, another cross section through a bog plant filter is shown, wherein the pump housing (80) is visible. This pump housing is sealed by a lid (83). Into this pump housing, at the bottom, the end of the drainage pipe terminates so that the filtered water ends up from the substrate in the pump housing. In the pump housing, further, a float or other switch mechanism for measuring the water level in the pump housing (85) can be present. Through the pump (81), the purified water is discharged via an outlet (82). In this Figure too, the flow direction of the water is indicated in arrows. It has also been made visible that the height of the surface water (52) will, in principle, be equal to the height of the water level in the filter (54) and that, hence, through the operation of the pump, there is a continuous water flow through the inlet openings (50, 51) to the filter and through the substrate layers (10, 20 and 30) via the drainage pipe (40) to the pump housing (80). It can also be seen that the intermediate layer (20) of the substrate is built up from a rock wool plate (21) and a layer with rock wool crumbs (22). The bottom layer (30) is for instance built up from a layer with phosphate adsorbent (31) and a layer with zeolite or Amberlite or a combination thereof (32). This cross section also shows that the edge (2) of the housing (1) has an edge (55) extending downwards into the water (57), thereby forming the water inlet cavity (4). The edge is of inclining design and provides space for, for instance, a solar panel (70).

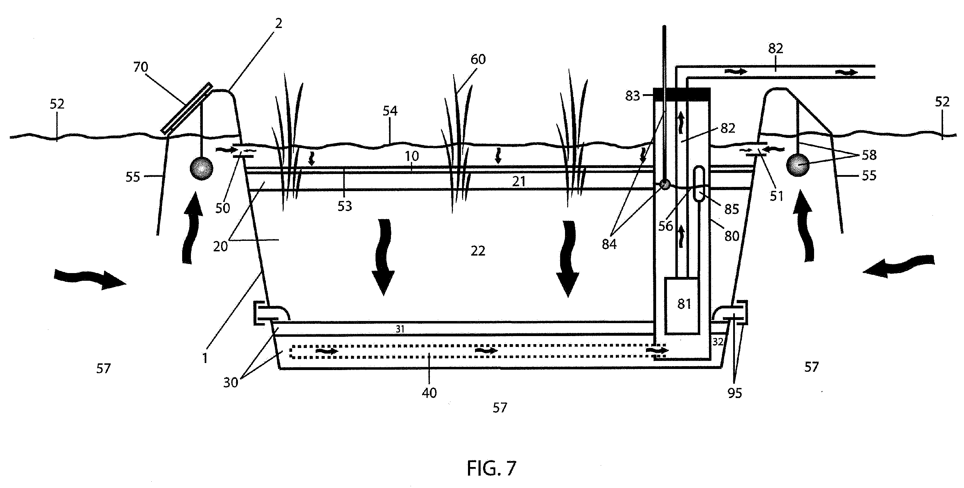

In Fig. 7, a similar cross section through the filter can be seen, however, at a moment that the pump is operative. Now, the water level in the pump housing (56) is lower than the water level (52) in the filter (54) itself, which, in turn, is lower than the water level (52) of the surface water (57). As a result, the water flow through the inlets (50, 51) will be directly mainly into the filter (thicker arrow), but naturally, some backflow (thinner arrow) can occur. The fact that the pump is not left dry is made visible by the sounding rod (84) which gives a visible indication of the water level in the pump. In this cross section, it is also indicated that treating the water with, for instance, air, in the space below the edge, is possible. To this end, aeration systems (58) can be provided. In the Figure it is also indicated that separate inlet for regeneration liquid (95) can be arranged.

A specific variant embodiment of the bog filter is shown in Fig. 8. Here, a roll-on mat (35) of zeolite or a different absorbent is represented, which can be rolled from one side of the filter to the other side of the filter. The mat lies between the drainage system (40) and the intermediate or bottom substrate layer (20 or 30) and is separated from the substrate by a water transmissive bottom (33) which may have been made of plastic or metal plate with holes large enough to prevent blockage (for instance 1 cm²) or slots such as in a drainage pipe with thereabove, possibly, a root cloth or other water transmissive material. Between the drainage system and the permeable bottom, guides (32) can be fitted. The mat can be rolled further manually or via electric drive.

Finally, Fig. 9 shows an impression of several connected bog plant filters with other floating elements, such as terraces, connected therebetween.

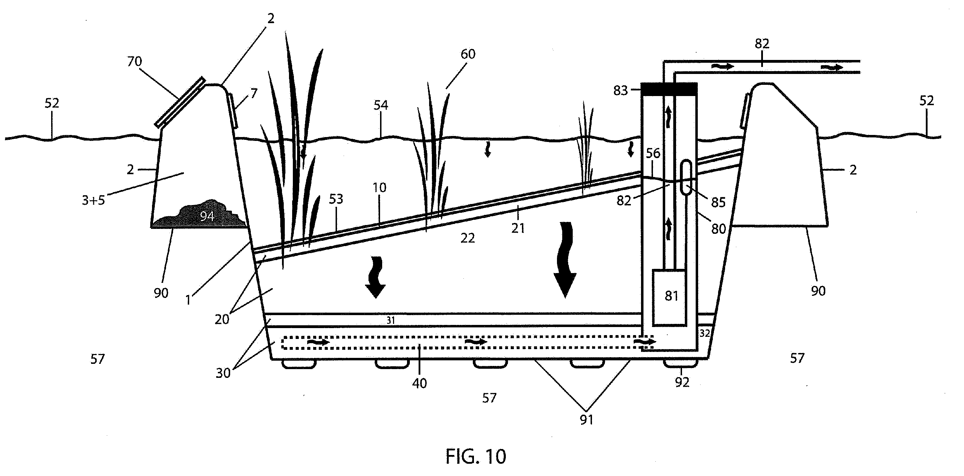

In Fig. 10, a cross section of a filter is given in which the substrate is provided in the filter in a sloping manner. However, the substrate still consists of three layers (10, 20 and 30). By way of illustration, at the bottom side of the filter, "legs" (92) are indicated which serve for reinforcing the bottom. Therebetween are recesses (91) for simplifying raising the entire housing (1) by means of, for instance, a forklift truck. These elements however are not used exclusively with the embodiment shown, but can also be fitted with the filters as shown in Fig. 6 and 7. The same holds for the completion of the edge (2) which is represented here at the location of a floating element or ballast tank (3+5). It is formed by the edge (2) which is closed towards the housing (1) by a U-shaped plate (90). As stated hereinabove, in the floating element, ballast (94) can be present which can be introduced into and removed from the tank via a feed-through hatch (7). At the location of the inlet opening (50, 51), the U-shaped ground plate (90) is not present (as represented in Fig. 6 and 7) so that here, surface water is present under the edge.

Fig. 11 shows a detail of the situation when a filter according to the invention is connected to an element that can serve as a swimming pool. Here, the water outlet 82 of the bog plant filter terminates into the swimming pool element, which, in fact, is no more than an empty housing (1). This housing can be composed of the same materials as the filter, but the walls and/or bottom may also be manufactured from (plastic) foil. The water outlet (82) can also be guided via a solar collector (71) and terminate via outlet 82b into the swimming pool. This transport can also be carried out in a playful manner, with for instance a fountain, water slide, waterfall or the like. In the swimming pool, the opening in the housing functions as water outlet (73) which can be separated from the rest of the swimming pool water by an overflow/skimmer (72).

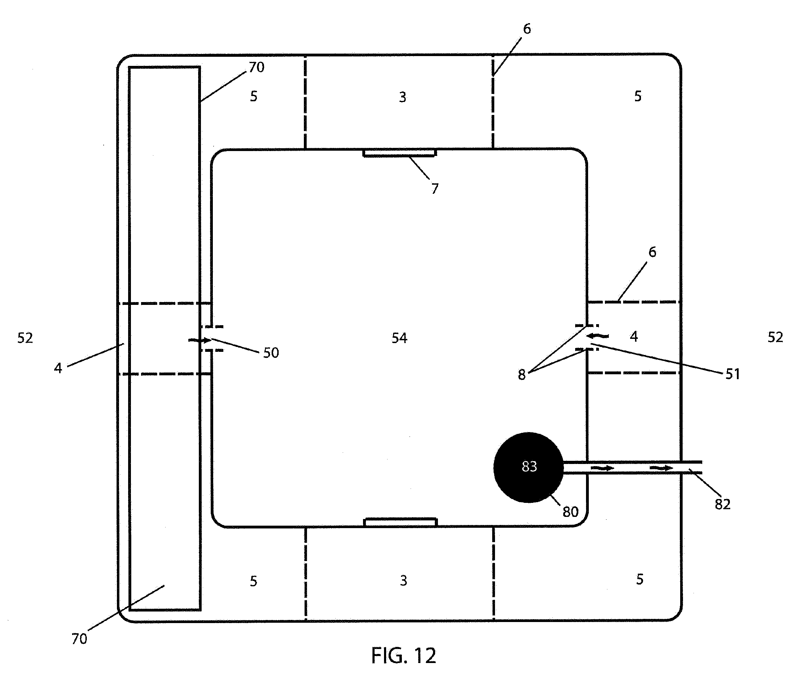

A top plan view of a bog plant filter is given in Fig. 12. In this embodiment, the floating elements (5) are shown alternating with ballast tanks (3). These are separated from each other by partitions (6). The place of the water inlet (4) is also separated by partitions and it terminates into the filter via an inlet pipe (50, 51). Further are indicated in the Figure the lid (83) of the pump housing (80) and the outlet pipe (82) terminating there, a solar panel (70) or solar collectors (not depicted) and the surface of the water outside (52) and inside (54) the filter. The bottom side of an embodiment of a filter is represented in Fig. 13. Visible are the recesses (91) in the bottom which are formed by upstanding "legs" (92). The edge (2) is covered by a plate (90) except at the locations (4) that belong to the water inlet (50, 51) where no edge bottom plate (90) is present but where the edge ends with the vertical plate (55). Optionally, eyelets (93) for fastening ropes and/or buffers can be fitted on the edge of the filter. When several elements as shown in Fig. 14 are connected, buffers (95) can be provided between the elements. The connections between the elements can be made by ropes or otherwise movable connecting means (96) which are fastened to the elements via the eyelets (93). Fig. 15 gives a detail of air filled buffers, in top plan view, such as they can be used in a special embodiment of the (connected) bog plant filter(s). In this buffer there is an air valve (101) for drawing in air at the top side and an air valve (100) for discharging air at the bottom side. The buffer itself consists of a space for the included air (102) which is surrounded by a floater space (103). In the floater space, eyelets (104) can be fitted for fastening via ropes etc. On the left hand side, the buffer is shown in a condition of rest and on the right hand side in compressed condition. Naturally, in compressed condition, the air space is smaller than in non-compressed condition, so that upon compressing, air is pressed via valve 100 downwards into the water and, upon expanding again, air is drawn in from above, via the valve 101.

## Claims

1. A floating connectable biological bog plant filter for purifying surface water, comprising a housing having one or more water inlets, which housing is filled with a substrate suitable for bog plants (helophytes), one or more floating elements fastened to or integrated in the housing, a pump in a pump housing and means for coupling the bog plant filter with adjacent bog plant filters or anchoring it to the bottom or bank of the surface water, **characterized in that** the one or more water inlets are situated below the level of the water surface and above the level of the substrate and that at the bottom of the substrate a drainage system is provided for collecting filtered surface water, which drainage system is connected to the pump housing.

2. A bog plant filter according to claim 1, wherein the water flow through the substrate is directed substantially downwards.

3. A bog plant filter according to claim 1, **characterized in that** the substrate consists of several layers.

4. A bog plant filter according to claim 2, **characterized in that** the substrate consists of a top layer, one or more intermediate layers and a bottom layer.

5. A bog plant filter according to claim 3, **characterized in that** the top layer comprises lava substrate, that the one or more intermediate layers comprise rock wool or products derived from rock wool, and that the bottom layer comprises an adsorbent.

6. A bog plant filter according to any one of the preceding claims, **characterized in that** the one or more floating elements are filled with air or other gases or gas mixtures, water, foam, PUR or empty soft drink bottles.

7. A bog plant filter according to claim 5, **characterized in that** the buoyancy of the one or more floating elements is variable.

8. A bog plant filter according to any one of the preceding claims, **characterized in that** the housing and the floating elements, independently of each other, are made of materials selected from the group consisting of wood and other natural products, plastic, such as polyester and polyester variants and HDPE, metal, foil, concrete and glass.

9. A bog plant filter according to any one of the preceding claims, **characterized in that** the one or more water inlets can be closed off.

10. A bog plant filter according to any one of the preceding claims, **characterized in that** the filter is provided with an energy supply selected from the group consisting of a solar cell, a windmill or wind turbine, a means for generating energy from water waves or water streams, a connection for mains current, optionally via a transformer, and combinations thereof.

11. A bog plant filter according to any one of the preceding claims, **characterized in that** to the substrate bacterial cultures are added.

12. A bog plant filter according to any one of the preceding claims, **characterized in that** it comprises an aerator for inflowing water.

13. A bog plant filter according to any one of the preceding claims, **characterized in that** it comprises a solar collector.

14. A method for cleaning surface water **characterized in that** a bog plant filter according to any one of claims 1 - 13 is used.

15. Use of a bog plant filter according to any one of claims 1 - 13 for cleaning surface water.
